# EUROPÄISCHE PATENTSCHRIFT

(11) **EP 1 082 503 B1**
(45) Veröffentlichungstag und Bekanntmachung des Hinweises auf die Patenterteilung: **18.12.2002**
(21) Anmeldenummer: 99927743.7
(22) Anmeldetag: 17.05.1999
(51) Int. Cl.: E04F 15/024, B32B 13/06

(54) **HOHLRAUMBODENKONSTRUKTION**
FALSE FLOOR CONSTRUCTION
FAUX-PLANCHER

(30) Priorität: 19.05.1998 DE 19822405
(43) Veröffentlichungstag der Anmeldung: 14.03.2001
(73) Patentinhaber: SEG Systementwicklungsgesellschaft MBH, 09456 Annaberg-Buchholz (DE)
(72) Erfinder: BAUNACH, Klaus-Peter, D-09456 Annaberg-Buchholz (DE); SCHMID, Udo, D-09468 Geyer (DE); KNUR, Christian, D-09456 Annaberg-Buchholz (DE); SÜSS, Elmar, D-09456 Annaberg-Buchholz (DE)
(74) Vertreter: Bauer, Steffen
(86) Internationale Anmeldenummer: EP9903377
(87) Internationale Veröffentlichungsnummer: WO99060228

(56) Entgegenhaltungen:
- EP-A- 0 529 072
- DE-A- 3 803 740
- FR-A- 2 360 415
- US-A- 3 380 217
- US-A- 5 046 291
- US-A- 5 115 621

## Beschreibung

Die Erfindung betrifft eine Hohlraumbodenkonstruktion für Wohn- und gewerblich genutzte Räume. Ein bevorzugtes Anwendungsgebiet der Erfindung ist die Altbausanierung.

Hohlraum- oder Doppelbodenkonstruktionen sind bekannt. Sie weisen vielfältige Vorteile wie das einfache Einbringen von wärme- und schalldämmenden Lagen sowie Ver- und Entsorgungsleitungen bis hin zu Fußbodenheizungen auf. Neben unmittelbar insgesamt auf der Baustelle ausgeführtem Fußbodenaufbau sind Konstruktionen bekannt, die vorgefertigte Bodenelemente verwenden. Eine solche Lösung ist in der deutschen Erfindungsbeschreibung DE 38 03 740 A1 als Verfahren zur Herstellung plattenartiger Bodenelemente zur Bildung einer Doppelbodenkonstruktion beschrieben. Danach besteht die bekannte Doppelbodenkonstruktion aus auf der tragfähigen Unterkonstruktion aufgestellten Stützen, auf denen plattenartige Bodenelemente direkt oder indirekt aufgelagert sind. Die Bodenelemente sind als Verbund einer keramischen Deckplatte, einer biegesteifen Kernschicht und einer zugfesten Unterschicht ausgeführt. Die Kernschicht wird in fließfähigem Zustand eingebracht und härtet danach aus. Um ein Verlaufen des fließfähigen Materials zu verhindern, ist die Unterschicht wannenförmig gestaltet, d.h. sie besteht wenigstens aus einem Rahmenflansch, der seitlich bis zur Deckplatte reicht. Zur Absicherung der Scherfestigkeit innerhalb des Verbundes sind zwischen den einzelnen Schichten Haftbrücken vorgesehen, die unter Form- und/oder Kraftschluß wirken. So können die Haftbrücken als lösungsmittelfreie Kunstharzdispersion ausgeführt sein. Ebenso ist dargestellt, daß die Scherfestigkeit durch unregelmäßige Ausbildung der Kontaktflächen der einzelnen Schichten herbeigeführt wird. Einwirkende Kräfte werden durch den Verbund in seiner Gesamtheit aufgenommen, wodurch eine Reduzierung der Bauhöhe der Bodenelemente erreicht wird, die wiederum zu einem einfacheren Ausgleich unterschiedlicher Hohlraumhöhen führt. Die Ausführung der Unterschicht als durchbrochene Wanne ermöglicht ohne zusätzliche Mittel sowohl die Einbringung des fließfähigen Materials als auch die Entlüftung der Kernschicht bei Einbringung und Aushärtung. Ist die Unterschicht jedoch als geschlossene Wanne ausgerührt, erfolgt das Einbringen des fließfähigen Materials mittels einer hierfür vorgesehenen Einfüllöffnung und die Entlüftung über Luftaustrittsöffnungen in der Unterschicht.

Nachteilig an dieser bekannten Lösung ist, daß zur Aufnahme der Druckkräfte eine hierfür geeignete, nämlich keramische Deckplatte erforderlich ist, wodurch die Oberflächengestaltung des Fußbodens allein darauf beschränkt ist Die Auflagestützen müssen entsprechend der zu erzielenden Bauhöhe des Doppelbodens vorgefertigt sein, wobei zu berücksichtigen ist, daß zwischen den Bodenelementen und den Stützen eine den Gegebenheiten entsprechende Trittschalldämmung einzubringen ist, und die Auflagestellen zudem die gesamten Scherkräfte aufnehmen müssen. Dies aber erfordert relativ großen technologischen Aufwand, soll die Oberfläche des Doppelbodens maßgenau über dem Rohboden angeordnet sein. Die beschriebene Lösung eignet sich darüber hinaus nur bedingt für die Installation einer Fußbodenheizung, da diese im Hohlraum zwischen Rohboden und den Bodenelementen untergebracht werden muß, die Bodenelemente wegen der verwendeten Materialien aber lediglich eine geringe Wärmeleitfähigkeit aufweisen und damit der Wirkungsgrad einer Fußbodenheizung relativ niedrig bleibt.Die Aufgabe der Erfindung besteht darin, eine Hohlraumboderikonstruktion zu schaffen, deren vorgefertigte Bodenelemente leicht zu transportieren sind und die sich durch geringen Verlegeaufwand sowie hohe Festigkeit in gebrauchsstellung auszeichnet.

Die Aufgabe wird durch die Erfindung gelöst mittels einer Hohlraumbodenkonstruktion gemäß Anspruch 1.

Ein die erfindungsgemäße Lösung weiterbildendes Merkmal besteht darin, daß die Kanten der Stahlbleche gezackt sind, wobei eine vorteilhafte Ausgestaltung darin besteht, wenn die Kantenauszackung im Rastermaß ausgeführt ist.

Die Erfindung ist auch dadurch weitergeführt, daß die Stahlbleche zueinander flächig versetzt angeordnet sind. In einer vorteilhaften Ausgestaltung der Erfindung beträgt der Versatz in beiden Flächenkoordinaten je ein Rastermaß, wodurch es möglich ist, daß die Bodenelemente im Kreuzverbund verlegt sind.

Eine weitere vorteilhafte Ausgestaltung der erfindungsgemäßen Hohlraumbodenkonstruktion besteht darin, daß die Gewindebolzen als Rohrbolzen mit Außengewinde ausgeführt und mit dauerelastischem Material verfüllbar sind und aus Strangmaterial bestehen, das nach der Nivellierung der Bodenelemente bündig zu deren Oberfläche abgelängt werden kann.

Vorteilhaft ausgestaltet ist die Erfindung, wenn das Rastennaß der kreisrunden Aussparungen wenigstens 50 mm beträgt. Der Rasterabstand soll jedoch 250 mm nicht überschreiten.

Die erfindungsgemäße Hohlraumbodenkonstrulction ist selbsttragend, hochfest, leicht und begehbar. Die Bodenelemente werden vorgefertigt, indem die gleichgestalteten Stahlbleche in zwei Achsen spiegelbildlich zueinander angeordnet und im vorgesehenen Abstand miteinander verbunden werden. Um eine Verlegung im Kreuzverbund zu ermöglichen, erfolgt die Anordnung der Stahlbleche zueinander in einem Versatz, so daß ein Stahlblech das andere jeweils an zwei Seiten überragt und derart ein oberer und ein unterer Randbereich entstehen.

Auf der Baustelle werden die lediglich aus den Stahlblechen bestehenden Bodenelementgerüste, die dadurch leicht zu transportieren und zu handhaben sind, verlegt, indem in die kreisrunden Aussparungen Gewindebolzen eingedreht werden, die sich gegen den Rohboden abstützen, wodurch die Bodenelemente gehoben und gesenkt werden können und dergestalt nivelliert werden. Die Verwendung von Strangmaterial, das nach der Nivellierung bündig mit der Oberfläche der Bodenelemente abgelängt wird, ist kostengünstig und bietet den Vorteil, daß eine vorherige Bestimmung der genauen Länge der Gewindebolzen entfallen kann. Die abgelängten Reststangen werden wieder als Gewindebolzen verwendet, bis sie aufgebraucht sind. Die überlappenden Randbereiche der Bodenelemente werden miteinander beispielsweise mittels Punktschweißen, Verschrauben oder auf andere geeignete Weise verbunden.

Zwischen die Stahlbleche sind Kabel und/oder Rohrleitungen einschiebbar. So kann beispielsweise eine elektrische oder Warmwasser-Fußbodenheizung unmittelbar in die Bodenelemente integriert werden.

Nach Verlegung und Nivellierung der Bodenelemente sowie gegebenenfalls Integration einer Installation erfolgt die Einbringung der biegesteifen Kernschicht, indem aushärtender Fließestrich eingefüllt wird. Hierbei verhindert die auf der Unterseite angebrachte Flächenabdichtung ein Durchsickern der fließenden Estrichmasse in den Hohlraum zwischen Rohboden und Bodenelementen. Nach dem Aushärten des Fließestrichs kann die Oberflächengestaltung des Fußbodens erfolgen.

Die Trittschalldämmung der Hohlraumbodenkonstruktion ist vorzugsweise dadurch gegeben, daß die Gewindebolzen als einzige mit dem Rohboden verbundenen Bauelemente als mit einer dauerelastischen Masse verfüllte Rohre ausgeführt und vorteilhafterweise in der Weise abgelängt sind, daß der Kontakt zum Rohboden ausschließlich über die dauerelastische Masse hergestellt wird.

Selbstverständlich besteht die Möglichkeit, den Hohlraum zwischen Rohboden und Bodenelementen zur Wärme- und/oder Schalldämmung zu nutzen. Besonders eignen sich hierfür Granulate, die nach der Nivellierung durch hierfür vorgesehene Öffnungen in den Bodenelementen eingeblasen werden. Doch auch vor der Verlegung der Bodenelemente eingebrachtes, beispielsweise mattenartiges Dämmaterial kann verwendet werden.

Die Stahlbleche gewährleisten die Unzerbrechlichkeit der Bodenelemente. Sie stellen eine Bewehrung dar, so daß der ausgehärtete Fließestrich lediglich Druckspannungen aufnehmen muß. Ein Hohlraumboden nach der Erfindung mit oder ohne integrierter Heizung kann auch bei großen Flächen raum- oder schwundfugenfrei gefertigt werden. Die geringe Bauhöhe ermöglicht beispielsweise in der Altbausanierung ein Fußbodenniveau, das einschließlich einer integrierten Heizung dem Niveau einer vorhandenen Dielung entspricht. Gleichermaßen ist es möglich, die Bodenelemente nach der Erfindung unmittelbar auf Altdielung oder direkt auf Balken zu verlegen.

Nachfolgend wird ein bevorzugtes Ausführungsbeispiel der Erfindung anhand der Zeichnung näher erläutert. Die Zeichnung zeigt in
- Fig. 1: einen Schnitt durch eine erfindungsgemäße Hohlraumboden konstruktion;
- Fig. 2: ein Bodenelement in schematisierter Schnittdarstellung und
- Fig. 3: ein Stahlblech in Draufsicht.

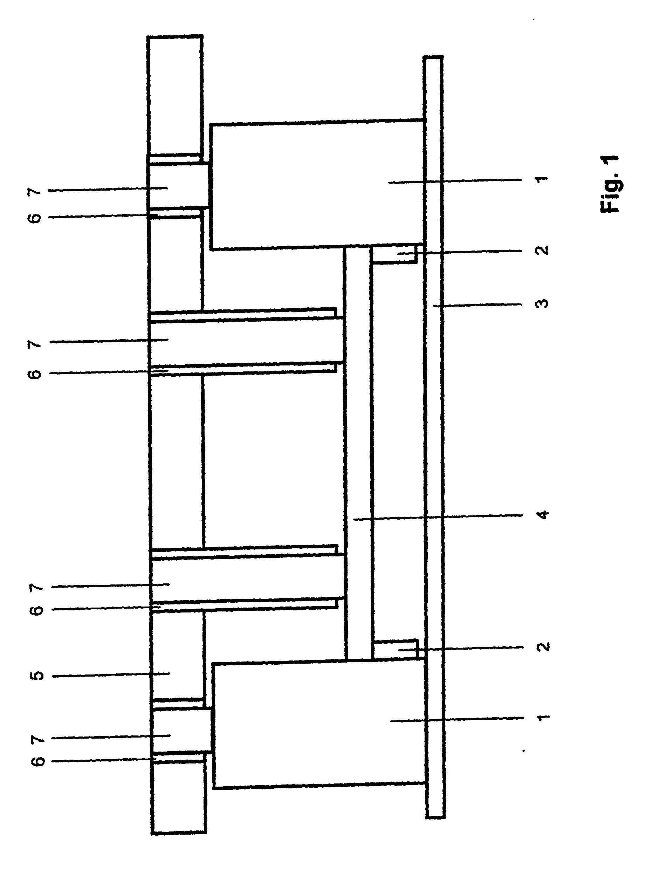

Fig. 1 zeigt eine erfindungsgemäße Hohlraumbodenkonstruktion im Zusammenhang mit einer herkömmlichen Holzbalkendecke. Die Holzbalkendecke besteht aus Holzbalken 1, an deren Unterseite eine Deckenplatte 3 befestigt ist. An den Seitenwangen der Holzbalken 1 sind Auflager 2 befestigt, auf denen ein Fehlboden 4 aufliegt. Der Fehlboden 4 dient als tragfähiger Rohboden. Mittels Gewindebolzen 6 ist ein Bodenelement 5 sowohl auf dem Fehlboden 4 als auch unmittelbar auf den Balken 1 gelagert. Die Gewindebolzen 6 sind aus Stahlpanzerrohr gefertigt, auf das ein Gewinde aufgewalzt ist. Die Kontaktfläche zwischen Gewindebolzen 6 und den Tragelementen Balken 1 bzw. Fehlboden 4 besteht aus dauerelastischem Material 7, welches das Innere der Gewindebolzen 6 ausfüllt, wodurch Trittschallübertragung vom Bodenelement 5 auf das Tragwerk unterbunden wird. Die Oberfläche der Hohlraumbodenkonstruktion nach der Erfindung ist völlig eben. Dies wird dadurch erreicht, daß die Gewindebolzen 6 aus Stangenmaterial hergestellt sind, indem nach der Nivellierung der Bodenelemente 5 das Stahlpanzerrohr in geringer Breite abgefräst, danach die dauerelastische Füllung bündig mit der Oberfläche der Bodenelemente 5 durchschnitten und schließlich das freie Endstück wiederum als Gewindebolzen 6 eingedreht wird. Der Hohlraum zwischen dem Fehlboden 4 und dem Bodenelement 5 kann in herkömmlicher Weise mit Dämmstoff verfüllt sein, wobei gleichermaßen mattenförmiges Dämmaterial vor der Verlegung der Bodenelemente 5 eingelegt oder Granulat nach der Verlegung der Bodenelemente 5 eingeblasen werden kann.

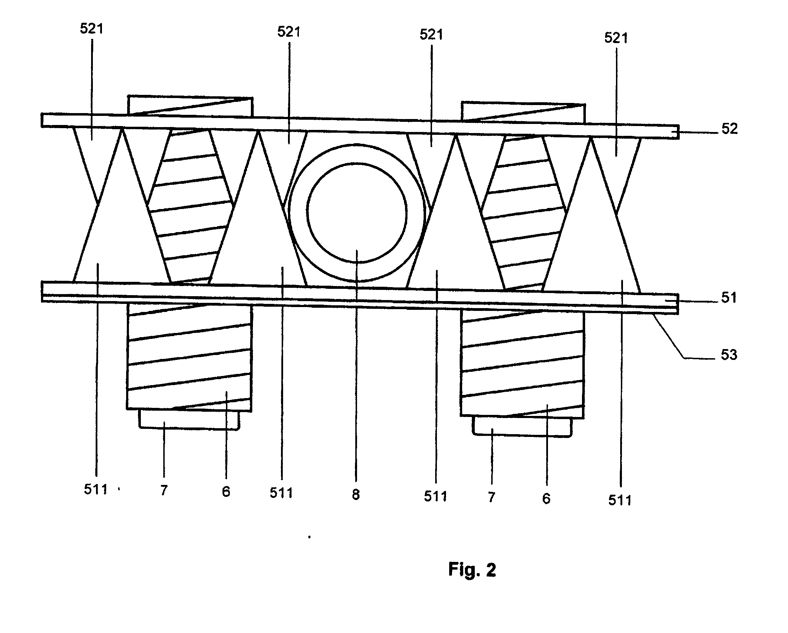

Den prinzipiellen Aufbau eines Bodenelementes 5 aus Fig. 1 zeigt Fig. 2. Es besteht aus zwei Stahlblechen 51 und 52, die über Abstandshalter 511 bzw. 521 von ca. 18 mm Länge verfügen. Vorteilhafterweise sind die Abstandshalter 511 und 521 durch Stanzen und Abkanten bzw. Tiefziehen unmittelbar aus der Stahlblechfläche heraus gewonnen. Die Stahlbleche 51 und 52 sind übereinander angeordnet, wobei stets ein Abstandshalter 511 mit einem Abstandshalter 521 punktverschweißt ist. Dadurch entsteht eine hochfeste, leichte, begehbare und unzerbrechliche Matte mit einer Dicke von ca. 20 mm. Zwischen den Abstandshaltern 511 und 521 ist eine Rohrleitung 8 einer Fußbodenheizung, deren Durchmesser üblicherweise ca. 18 mm beträgt, eingeschoben.

In das Bodenelement sind Gewindebolzen 6 aus Stahlpanzerrohr mit dauerelastischen Kernen 7 eingedreht, die allerdings lediglich schematisch dargestellt sind. Das Bodenelement 5 wird nach seiner Verlegung und Nivellierung durch eine nicht dargestellte Kernschicht zwischen den Stahlblechen 51 und 52 vervollständigt. die als fließfähiger Estrich eingebracht wird. Um ein Durchsickern des Fließestrichs durch das untere Stahlblech zu verhindern, ist auf dessen Unterseite eine Flächenabdichtung 53 aufgebracht, die von den Gewindebolzen 6 beim Eindrehen durchstoßen wird. Die Flächenabdichtung 53 kann vorteilhafterweise aus schall- und/oder wärmedämmendem Material bestehen. Die spezifische Masse eines Hohlraumbodens nach der Erfindung beträgt weniger als 40 kg/m². Die eingeschobene Fußbodenheizung zeichnet sich wegen der geringen Wärmespeicherung der Bodenelemente durch kurze Aufheizphasen aus.

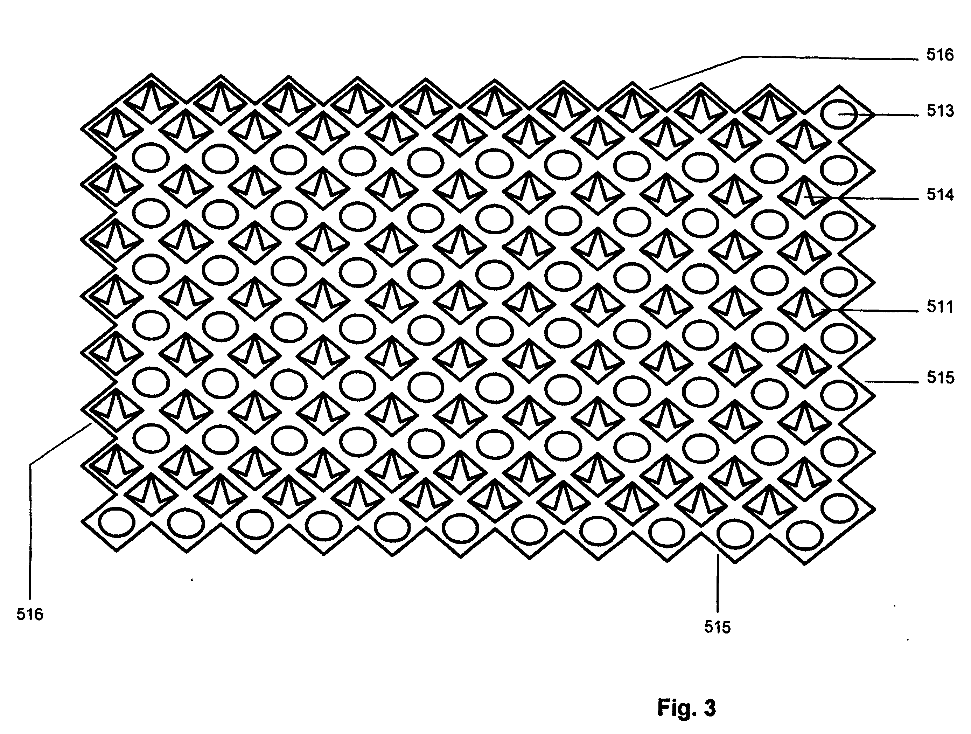

Fig. 3 zeigt ein Stahlblech 51 bzw. 52 aus Fig. 2 in Draufsicht. Das Stahlblech 51 bzw. 52 weist ein regelmäßiges schachbrettartiges Raster auf, dessen Felder aus kreisrunden Aussparungen 513 und quadratischen durch Stanzen und Tiefziehen entstandenen Bereichen 514 bestehen. Die quadratischen Felder 514 bilden die Abstandshalter 511 bzw. 521 gemäß Fig. 2, indem die Diagonalen der quadratischen Bereiche zwischen den Aussparungen 513 gestanzt und die Kantendreiecke tiefgezogen werden. Die Kanten des Stahlblechs sind als Randbereiche 515 und 516 gestaltet. Mittels der Randbereiche ist ein überlappendes Verlegen der Bodenelemente 5 einschließlich eines Kreuzverbundes ohne Raum- oder Schwundfugen gewährleistet. Die verzahnte Randgestaltung bewirkt einen Kraftschluß zwischen benachbart verlegten Bodenelementen. Je eine kreisrunde Aussparung 513 zweier gemäß Fig. 2 übereinander angeordneter Stahlbleche 51 und 52 bilden das Muttergewinde für einen Gewindebolzen 6. Die Anordnung in einem Rasterabstand von 50 mm und darüber ermöglicht, daß hinreichend viele Gewindebolzen 6 an für die Festigkeit der Hohlraumbodenkonstruktion bedeutsamen Stellen eingebracht werden können.

## Patentansprüche

1. Hohlraumbodenkonstruktion mit gegen den tragfähigen Rohboden (1, 4) abzustützenden plattenförmigen, aus einem mehrschichtigen Verbund bestehenden Bodenelementen (5), **dadurch gekennzeichnet, daß** die Bodenelemente (5) aus zwei flächig zueinander angeordneten gleichgestalteten Stahlblechen (51, 52) mit einem durch in den Zwischenraum zwischen den Stahlblechen (51, 52) ragenden Abstandhaltern (511, 521) definierten Abstand gebildet sind, wobei die Abstandhater (511) des ersten Stahlblechs (51) mit den Abstandhaltern (521) des zweiten Stahlblechs (52) verbunden sind und die Stahlbleche (51, 52) mit in einem Raster angeordneten kreisrunden Aussparungen (513) versehen sind, die alle den gleichen Durchmesser aufweisen und wobei an der Unterseite des unteren Stahlblechs (51) eine Flächenabdichtung (53) aufgebracht ist, in geeignetem Abstand in jeweils achsengleich angeordnete Ausspanmgen (513) die Flächenabdichtung (53) durchstoßende, die Bodenelemente (5) nivellierende Gewindebolzen (6) eingedreht sind, die auf der Rohdecke (1, 4) drehbar abzustützenden sind, und der Zwischenraum zwischen den Stahlblechen (51, 52) mit aushärtendem, eine biegesteife Kernschicht bildendem Fließestrich ausfüllbar ist, wobei die Bodenelemente (5) so ausgebildet sind, daß der Fließestrich nach Verlegung und Nivellierung der Stahlbleche (51,52) eingebracht werden kann.

2. Hohhaumbodenkonstruktion nach Anspruch 1, **dadurch gekennzeichnet, daß** die Kanten (515,516) der Stahlbleche (51,52) gezackt sind.

3. Hohhaumbodenkonstruktion nach Anspruch 2, **dadurch gekennzeichnet, daß** die Kantenauszackung (515,516) im Rastermaß ausgeführt ist.

4. Hohlraumbodenkonstruktion nach 1, 2 oder 3, **dadurch gekennzeichnet, daß** die Stahlbleche (51,52) zueinander flächig versetzt angeordnet sind.

5. Hohlraumbodenkonstruktion nach Anspruch 4, **dadurch gekennzeichnet, daß** die Versetzung in beiden Koordinaten je ein Rastermaß beträgt

6. Hohlraumbodenkonstruktion nach Anspruch 4 oder 5, **dadurch gekennzeichnet, daß** die Bodenelemente (5) im Kreuzverbund verlegbar sind.

7. Hohlraumbodenkonstruktion nach einem der vorstehenden Ansprüche, **dadurch gekennzeichnet, daß** die Gewindebolzen (6) als Rohrbolzen mit Außengewinde ausgeführt und mit dauerelastischem Material (7) verfullbar sind und aus Strangmaterial bestehen, das nach der Nivellierung der Bodenelemente (5) bündig zu deren Oberfläche abgelängt werden kann.

8. Hohlraumbodenkonstruktion nach einem der vorstehenden Ansprüche, **dadurch gekennzeichnet, daß** als Rastennaß der kreisrunden Aussparungen (513) wenigstens 50 mm vorgesehen sind.

## Claims

1. A hollow floor construction with plate-shaped floor elements (5) that consist of a multilayer composite and are supported on the bare load-bearing floor (1,4), **characterized by** the fact that the floor elements (5) consist of two identically designed steel plates (51, 52) that are arranged parallel to one another and held at a defined distance from one another by spacers (511, 521) that protrude into the intermediate space between the steel plates (51, 52), wherein the spacers (511) of the first steel plate (51) are connected to the spacers (521) of the second steel plate (52) and the steel plates (51, 52) are provided with circular recesses (513) of identical diameter which are arranged in the form of a grid, wherein a surface seal (53) is applied onto the underside of the lower steel plate (51), wherein threaded bolts (6) for leveling the floor elements (5) which are rotatably supported on the bare floor (1, 4) and penetrate the surface seal (53) are respectively screwed into equiaxially arranged recesses (513) at suitable distances from one another, wherein the intermediate space between the steel plates (51, 52) can be filled with hardening floating floor screed that forms a deflection-resistant core layer, and wherein the floor elements (5) are designed such that the floating floor screed can be introduced after installing and leveling the steel plates (51, 52).

2. The hollow floor construction according to Claim 1, **characterized by** the fact that the edges (515, 516) of the steel plates (51, 52) are serrated.

3. The hollow floor construction according to Claim 2, **characterized by** the fact that the serration of the edges (515, 516) is realized in accordance with the grid dimension.

4. The hollow floor construction according to Claim 1, 2 or 3, **characterized by** the fact that the steel plates (51, 52) are arranged offset parallel to one another.

5. The hollow floor construction according to Claim 4, **characterized by** the fact that the offset respectively amounts to one grid dimension in both coordinates.

6. The hollow floor construction according to Claim 4 or 5, **characterized by** the fact that the floor elements (5) can be installed in the form of a diagonal bracing.

7. The hollow floor construction according to one of the preceding claims, **characterized by** the fact that the threaded bolts (6) are realized in the form of tubular bolts with an outside thread which can be filled with a permanently elastic material (7) and consist of a continuously cast material that can be cut off flush with the surface of the floor elements (5) after they are leveled.

8. The hollow floor construction according to one of the preceding claims, **characterized by** the fact that the grid dimension of the circular recesses (513) amounts to at least 50 mm.

## Revendications

1. Structure de sol alvéolaire comprenant des éléments de sol (5) se composant d'un composite stratifié, en forme de plaque prenant appui sur le sol brut porteur (1, 4) **caractérisée en ce que** les éléments de sol (5) sont constitués par deux tôles d'acier (51, 52) de forme identique et disposées l'une par rapport à l'autre avec une distance définie par des espaçateurs (511, 521) faisant saillie entre les tôles d'acier (51, 52), les espaçateurs (511) de la première tôle (51) étant reliés avec les espaçateurs (521) de la seconde tôle d'acier (52) et les tôles d'acier (51, 52) étant munies d'évidements circulaires (513), disposés dans une trame et présentant tous le même diamètre, et une garniture d'étanchéité (53) de surface étant appliquée sur la face inférieure de la tôle inférieure (51), des boulons filetés (6) étant vissés à distance appropriée dans des évidements (513) disposés équiaxiaux et traversant la garniture d'étanchéité (53), boulons qui lissent les éléments de sol (5), qui prennent appui sur le sol brut (1, 4) de manière rotative et l'espace entre les tôles d'acier (51, 52) pouvant être rempli d'une chape fluidifiée durcissante formant une couche centrale résistante à la flexion, les éléments de sol (5) étant conçus de manière à permettre l'introduction de la chape fluidifiée après la pose et le lissage des tôles d'acier (51, 52).

2. Structure de sol alvéolaire selon la revendication 1, **caractérisée en ce que** les bords (515, 516) des tôles (51, 52) sont dentelés.

3. Structure de sol alvéolaire selon la revendication 2, **caractérisée en ce que** la dentelure des bords (515, 516) est réalisée en dimension modulaire.

4. Structure de sol alvéolaire selon la revendication 1, 2 ou 3, **caractérisée en ce que** les tôles d'acier (51, 52) sont disposées de manière décalée entre elles.

5. Structure de sol alvéolaire selon la revendication 4, **caractérisée en ce que** le décalage dans les deux coordonnées s'élève à une dimension modulaire.

6. Structure de sol alvéolaire selon la revendication 4 ou 5, **caractérisée en ce que** les éléments de sol (5) peuvent être posés en croisé.

7. Structure de sol alvéolaire selon l'une des revendications précédentes, **caractérisée en ce que** les boulons filetés (6) sont réalisés comme des boulons tubulaires avec un filetage externe, **en ce qu'**ils peuvent être remplis de matériau à élasticité permanente (7), et **en ce qu'**ils se composent de matériau extrudé qui peut être affleuré avec la surface des éléments de sol (5) après le lissage des éléments de sol.

8. Structure de sol alvéolaire selon l'une des revendications précédentes, **caractérisée en ce qu'**il est prévu comme dimension modulaire au moins 50 mm pour les évidements circulaires (513).
